# FASCICULE DE BREVET EUROPEEN

(11) **EP 2 602 531 B1**
(45) Date de publication et mention de la délivrance du brevet: **04.05.2016**
(21) Numéro de dépôt: 12194266.8
(22) Date de dépôt: 26.11.2012
(51) Int. Cl.: F16L 37/088, F16L 37/12, F16L 21/03

(54) **Organe de verrouillage d'un dispositif de raccordement pour transfert de fluide, ce dispositif et son procédé de verrouillage.**
Verriegelungsorgan einer Anschlussvorrichtung für den Transfer eines Fluids, diese Vorrichtung und ihr Verriegelungsverfahren
Locking member of a connection device for fluid transfer, said device and method for locking same

(30) Priorité: 06.12.2011 FR 1161215
(43) Date de publication de la demande: 12.06.2013
(73) Titulaire: HUTCHINSON, 75008 Paris (FR)
(72) Inventeur: Bongiorni, Jean-Baptiste, 45200 MONTARGIS (FR); Godeau, Denis, 45260 VIEILLES MAISONS (FR)
(74) Mandataire: Gevers & Orès

(56) Documents cités:
- EP-A1- 2 251 581
- FR-A1- 2 883 607

## Description

La présente invention concerne un organe de verrouillage destiné à équiper un dispositif de raccordement encliquetable pour transfert de fluide, un tel dispositif de raccordement incorporant cet organe de verrouillage et son procédé de verrouillage. L'invention s'applique à des raccords rapides pour transférer tous types de fluides sous pression, et en particulier pour un circuit d'admission d'air de véhicule automobile tel qu'un circuit de retour sur boîtier papillon d'un conduit de refroidissement d'un moteur thermique suralimenté en air.

D'une manière générale dans un circuit de transfert de fluide pour véhicule automobile, il est connu, pour raccorder un tuyau souple ou rigide à un embout mâle verrouillable via une collerette qu'il présente, d'utiliser un dispositif de raccordement incorporant un embout femelle pourvu par soudage ou clipsage d'un connecteur femelle recevant cet embout mâle, un joint d'étanchéité annulaire plaqué contre l'embout mâle une fois ce dernier emmanché dans le connecteur femelle, et une épingle de verrouillage insérée à travers ce connecteur femelle pour y bloquer l'embout mâle en position rentrée et verrouillée. On peut par exemple citer le document FR-B1-2 891 889 pour la description d'un tel dispositif de raccordement verrouillable, et les documents EP-A1-2 251 581, FR-B1-2 855 590 et WO-A1-2006/099933 décrivant différentes épingles métalliques de verrouillage utilisables dans un tel dispositif.

Un inconvénient majeur des dispositifs de raccordement connus est qu'ils ne présentent pas une tenue mécanique suffisante sur les embouts à collerette de faible hauteur radiale, ce qui peut provoquer la déconnexion du dispositif par décrochage de l'épingle vis-à-vis de l'embout mâle.

Un autre inconvénient de ces dispositifs existants à épingle métallique est qu'ils ne facilitent pas le montage de l'épingle au contact de l'embout mâle.

Un but de la présente invention est de proposer un organe de verrouillage destiné à équiper un dispositif de raccordement encliquetable pour transfert de fluide comprenant un embout tubulaire mâle à collerette et à extrémité de raccordement convergente et arrondie, et un embout tubulaire femelle entouré et prolongé axialement par une bague femelle de connexion et recevant de manière étanche l'embout mâle, cet organe remédiant notamment à ces inconvénients et comportant deux ailes de verrouillage élastiques réunies entre elles par une tête de préhension et adaptées pour être enfoncées transversalement et réversiblement à travers deux lumières symétriques respectives de la bague puis pour se bloquer par encliquetage contre et derrière la collerette suite à l'insertion complète de l'embout mâle dans l'embout femelle, chaque aile présentant une section transversale variant sur sa longueur et deux faces interne et externe reliées entre elles par deux faces avant et arrière par rapport à la direction d'insertion de l'embout mâle.

A cet effet, un organe selon l'invention est tel que chaque aile comprend localement des portions inclinées qui sont formées sur la face avant en retrait d'une portion la plus avancée de cette face avant et qui comprennent :
- au moins une portion inclinée de guidage qui relie cette portion la plus avancée à la face interne et qui est adaptée pour coopérer avec ladite extrémité de l'embout mâle qui écarte les ailes l'une de l'autre de sorte à guider l'insertion de cet embout jusqu'à ce que sa collerette dépasse axialement ces ailes, et
- au moins une portion inclinée de blocage qui relie cette portion la plus avancée au reste de la face avant en s'éloignant de la face interne et qui est adaptée pour coopérer avec la bague en bloquant les ailes en position refermée axialement contre des bords avant desdites lumières de sorte à s'opposer à l'ouverture de l'organe en fonctionnement.

Dans la présente description, les expressions « derrière » ou « arrière » désignent des positionnements relatifs selon l'axe de symétrie des embouts mâle et femelle et de la bague qui sont tournés axialement à l'opposé de la direction d'insertion de l'extrémité de raccordement de l'embout mâle, et les expressions « devant », « avant » ou « avancée » désignent des positionnements relatifs selon cet axe qui sont tournés axialement vers la direction d'insertion de cette extrémité de l'embout mâle.

Selon une autre caractéristique de l'invention, ladite au moins une portion inclinée de guidage et ladite au moins une portion inclinée de blocage peuvent être chacune définies, sur une même section transversale de chaque aile, par un chanfrein formant un angle de 30 à 60° avec ladite portion la plus avancée de ladite face avant et/ou avec ladite face interne.

On notera que la ou les portions inclinées de guidage procurent ainsi une aide au montage du dispositif permettant de faciliter l'insertion de l'embout mâle au contact de la ou des portions inclinées de guidage de l'épingle formant autant de chanfreins d'attaque de l'embout mâle, et que la ou les portions inclinées de blocage permettent de sécuriser le blocage de l'épingle contre l'embout mâle en garantissant le verrouillage du dispositif en fonctionnement.

Avantageusement, cet organe de verrouillage peut présenter une structure composite comprenant :
- une épingle métallique de verrouillage comportant un sommet formant ladite tête de préhension et deux branches globalement arquées présentant respectivement deux extrémités libres par exemple recourbées d'un même côté axial du reste de l'épingle pour favoriser leur guidage dans la bague de connexion, et
- deux fourreaux plastiques de verrouillage qui sont respectivement solidaires de ces branches à l'exception de leurs extrémités libres et qui définissent chacun à eux seuls ladite face interne, ladite face externe et ladite face avant de chaque aile incluant lesdites portions inclinées.

On notera que les extrémités libres de l'épingle pourraient être en variante situées dans le plan de ces branches, en étant recourbées ou non (i.e. par exemple à extrémités droites dans le prolongement des branches).

Selon une autre caractéristique préférentielle de l'invention, chaque fourreau de verrouillage peut présenter sur ladite section transversale de chaque aile globalement une forme de « U » enserrant partiellement chaque branche d'épingle, laquelle épingle pouvant être de section transversale arrondie ou polygonale, chaque fourreau étant de préférence monté sur l'épingle par clipage ou en variante étant solidaire de l'épingle par surmoulage (i.e. par injection d'une matière plastique constituant ce fourreau sur les branches de l'épingle disposées dans un moule).

De préférence et indépendamment de la forme recourbée ou non des extrémités de l'épingle, cette épingle selon l'invention présente une section transversale sensiblement polygonale et, à titre encore plus préférentiel, globalement carrée.

Un dispositif de raccordement selon l'invention comprend :
- un embout tubulaire mâle à extrémité de raccordement convergente et arrondie et à collerette de raccordement définissant entre elles un tronçon d'extrémité globalement cylindrique de cet embout,
- un embout tubulaire femelle à portion terminale de raccordement recevant de manière étanche l'embout mâle par interposition d'au moins un joint d'étanchéité annulaire radialement autour de l'embout mâle,
- une bague de connexion montée radialement sur cette portion de raccordement en la prolongeant axialement en une portion tubulaire avant de la bague à deux lumières en arc de cercle symétriques l'une de l'autre par rapport à l'axe de symétrie de la bague et chacune délimitées axialement par un bord avant et un bord arrière, et
- un organe de verrouillage de l'embout mâle dans l'embout femelle comportant deux ailes de verrouillage élastiques qui sont réunies entre elles par une tête de préhension et qui sont enfoncées transversalement de manière réversible à travers lesdites lumières en étant adaptées pour se bloquer par encliquetage en une position verrouillée contre et derrière la collerette suite à l'insertion complète de l'embout mâle dans l'embout femelle,
et ce dispositif est caractérisé en ce que l'organe de verrouillage est tel que défini ci-dessus, de telle sorte que :
- lors du début de l'insertion de l'embout mâle à l'intérieur de la bague, l'extrémité de raccordement de l'embout mâle appuie sur ladite au moins une portion inclinée de guidage de chaque aile préalablement enfoncée à travers la bague en écartant les deux ailes l'une de l'autre pour les guider sur le tronçon d'extrémité de l'embout mâle jusqu'à l'obtention de la position verrouillée des ailes derrière et contre la collerette, puis que
- dans cette position verrouillée, ladite au moins une portion inclinée de blocage de chaque aile bloque les ailes en position refermée axialement contre lesdits bords avant desdites lumières en s'opposant ainsi à l'ouverture intempestive en fonctionnement des ailes.

Comme expliqué ci-dessus, on notera que la ou les portions inclinées de guidage et de blocage selon l'invention permettent de satisfaire pleinement aux exigences de montage aisé et de verrouillage garanti (i.e. excluant toute ouverture intempestive de l'épingle en fonctionnement) pour un tel dispositif de raccordement.

Selon une autre caractéristique de ce dispositif de l'invention, lesdites faces internes respectives des ailes sont écartées l'une de l'autre dans la position verrouillée d'une distance qui est inférieure au diamètre externe de la collerette et desdits bords avant des lumières.

Avantageusement, cet organe de verrouillage peut présenter une structure composite comprenant :
- une épingle métallique de verrouillage de section transversale arrondie ou polygonale comportant un sommet formant ladite tête de préhension et deux branches globalement arquées, et
- deux fourreaux plastiques de verrouillage qui sont respectivement solidaires de ces branches par exemple par clipage ou surmoulage et qui viennent au contact de l'embout mâle et desdits bords avant des lumières de la bague lors de l'insertion complète de l'embout mâle.

Selon une autre caractéristique de l'invention, ledit au moins un joint d'étanchéité annulaire peut être interposé radialement entre l'embout mâle et l'embout femelle et axialement en deçà de l'extrémité de ce dernier et desdits bords arrière des lumières, l'embout mâle présentant de préférence :
- ledit tronçon d'extrémité qui sert de portée pour ce joint, et
- un tronçon de serrage globalement cylindrique situé derrière la collerette, laquelle diverge à partir du tronçon d'extrémité de manière sensiblement tronconique puis se termine par une portion annulaire radiale derrière laquelle butent les ailes dans la position verrouillée, le tronçon de serrage présentant un diamètre inférieur à celui du tronçon d'extrémité.

Le procédé de verrouillage selon l'invention d'un dispositif de raccordement tel que celui précité comprend essentiellement:
a) une insertion radiale de l'organe de verrouillage en position enfoncée à travers la bague équipant ladite portion de raccordement de l'embout femelle par une pression manuelle exercée sur ladite tête de préhension de cet organe, de sorte que ses ailes soient logées dans lesdites lumières,
b) une insertion axiale progressive de l'embout mâle à l'intérieur de la bague ainsi équipée pour que l'extrémité de raccordement de l'embout mâle appuie sur ladite au moins une portion inclinée de guidage de chaque aile en écartant les ailes l'une de l'autre pour les guider sur le tronçon d'extrémité de l'embout mâle, puis
c) un enfoncement complet de l'embout mâle jusqu'à l'obtention de ladite position verrouillée où les ailes sont calées derrière et contre ladite collerette et où ladite au moins une portion inclinée de blocage bloque ces ailes en position refermée axialement contre lesdits bords avant des lumières de la bague, pour s'opposer à l'ouverture intempestive en fonctionnement de ces ailes.

Selon une autre caractéristique de l'invention, ce procédé peut comprendre, avant l'étape a), une solidarisation par clipage ou par surmoulage de deux fourreaux plastiques de verrouillage respectivement avec deux branches d'une épingle métallique, pour que ces fourreaux viennent au contact de l'embout mâle et des bords avant des lumières aux étapes b) et c).

D'autres caractéristiques, avantages et détails de la présente invention ressortiront à la lecture de la description suivante d'un exemple de réalisation de l'invention, donné à titre illustratif et non limitatif, la description étant réalisée en référence avec les dessins joints, parmi lesquels :
la figure 1 est une vue semi-éclatée en perspective latérale d'un dispositif de raccordement selon un exemple de l'invention montrant un embout mâle à insérer dans un embout femelle équipé d'une bague de connexion, d'un joint d'étanchéité et d'un organe de verrouillage,
la figure 2 est une vue éclatée en perspective latérale du dispositif de la figure 1 sans l'embout mâle, détaillant notamment la structure composite de l'organe de verrouillage,
la figure 3 est une vue partielle en demi-section axiale de ce dispositif suivant le plan III-III de la figure 2, montrant la coopération entre embout mâle et organe de verrouillage dans une phase initiale d'insertion de l'embout mâle dans la bague de l'embout femelle,
la figure 4 est une vue de détail en demi-section axiale du dispositif de la figure 3 en position verrouillée de l'organe de verrouillage sur l'embout mâle, montrant la coopération entre l'organe, la bague et cet embout,

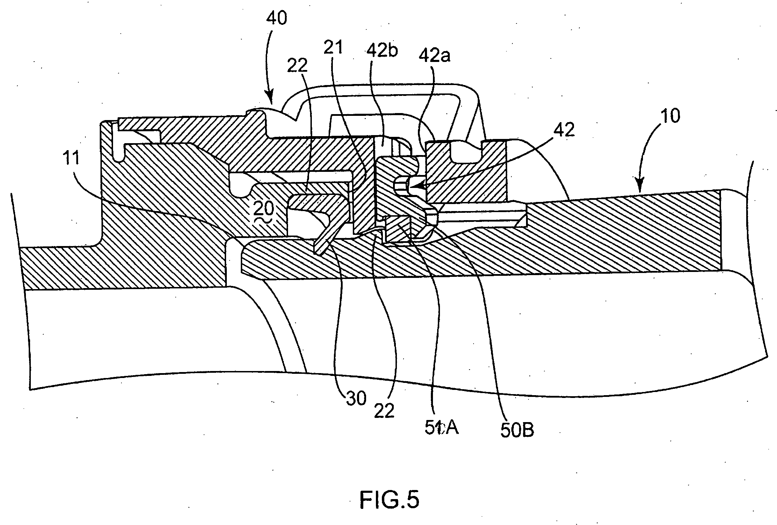

la figure 5 est une vue partielle en demi-section axiale de ce même dispositif suivant le plan V-V de la figure 2, montrant également l'organe de verrouillage en position verrouillée sur l'embout mâle,
la figure 6 est une vue assemblée en perspective latérale du même dispositif de raccordement dans cette position verrouillée de l'organe de verrouillage correspondant aux figures 4 et 5,
la figure 7 est une vue en section radiale de ce dispositif dans le plan transversal médian de l'organe de verrouillage, montrant la structure composite de cet organe à l'état enfoncé dans la bague de connexion, et
la figure 8 est une vue semi-éclatée en perspective latérale de ce dispositif de raccordement montrant les opérations à effectuer pour déverrouiller et déconnecter ce dispositif une fois verrouillé.

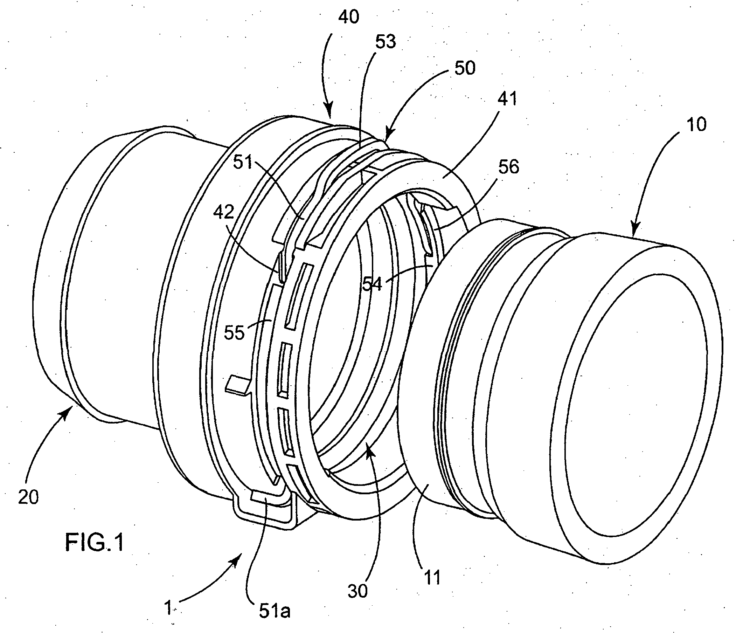

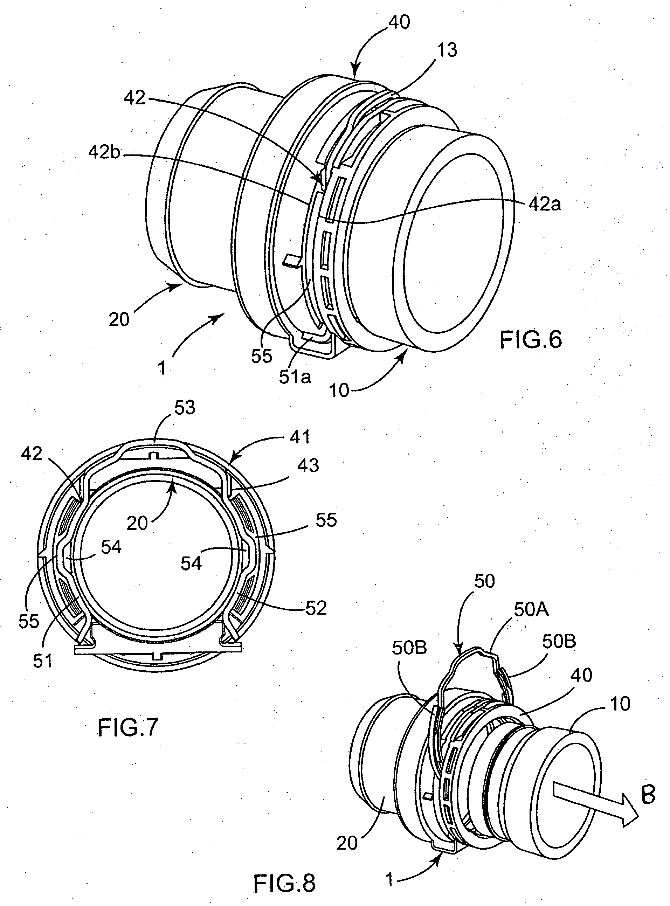

Un dispositif de raccordement 1 selon l'invention (voir figures 1 à 4), qui est notamment utilisable dans un circuit d'admission d'air d'un véhicule automobile, comprend essentiellement :
- un embout tubulaire mâle 10 à extrémité circonférentielle de raccordement 11 convergente et arrondie et à collerette de raccordement 12 définissant entre elles un tronçon d'extrémité cylindrique 13,
- un embout tubulaire femelle 20 qui comprend une portion terminale de raccordement 21 recevant de manière étanche l'embout mâle 10 par interposition d'un joint d'étanchéité annulaire 30 radialement autour de l'embout mâle 10,
- une bague femelle de connexion 40 montée radialement sur la portion de raccordement 21 (par exemple par soudage) en la prolongeant axialement en une portion tubulaire avant 41 de la bague 40 à deux lumières en arc de cercle 42 et 43 symétriques l'une de l'autre (visibles à la figure 7)par rapport à l'axe de symétrie de la bague 40 et chacune délimitées axialement par un bord avant 42a et par un bord arrière 42b, et
- un organe de verrouillage 50 de l'embout mâle 10 dans l'embout femelle 20 globalement en forme de U comportant deux ailes de verrouillage élastiques 51 et 52 qui sont réunies entre elles par une tête de préhension 53 et qui sont enfoncées transversalement de manière réversible à travers les lumières 42 et 43 en étant adaptées pour se bloquer par encliquetage en une position verrouillée contre et derrière la collerette 12 suite à l'insertion complète de l'embout mâle 10 dans l'embout femelle 20.

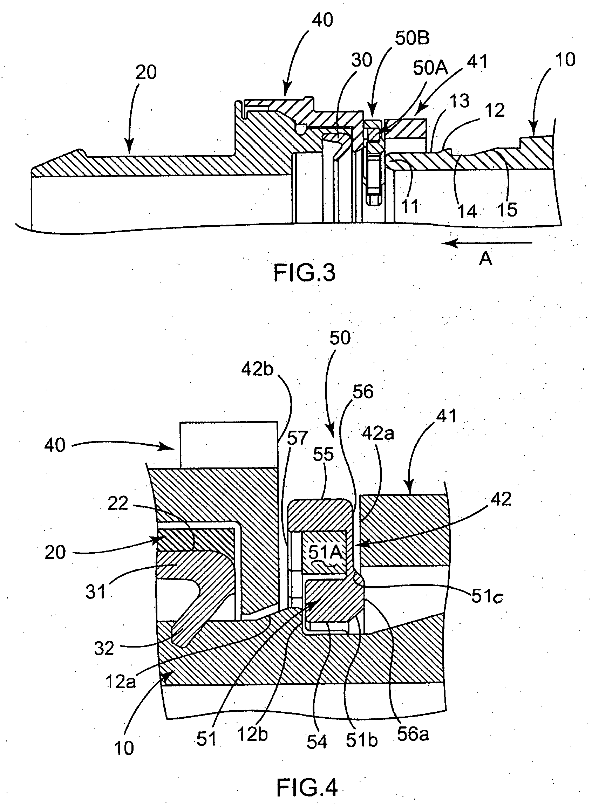

Plus précisément et comme visible à la figure 3, l'embout mâle 10 est métallique et présente, à partir de son extrémité de raccordement 11, le tronçon d'extrémité 13 de diamètre D1, une rampe tronconique 12a de la collerette 12 qui diverge à partir du tronçon 13 pour atteindre un diamètre D2 puis qui se termine par une portion annulaire radiale 12b de la collerette 12, un second tronçon cylindrique de serrage 14 de diamètre D3 qui prolonge à angle droit la portion radiale 12b, et un troisième tronçon tronconique 15 qui diverge à partir du second tronçon 14 pour atteindre un diamètre D4 (avec D3 <D1 < D2 < D4).

Comme visible aux figures 3 et 4, le joint d'étanchéité 30 est dans cet exemple un joint à lèvre (étant précisé qu'il pourrait être en variante torique ou de section non circulaire) qui comporte un corps de joint 31 calé dans une gorge circonférentielle 22 de la face interne de la portion terminale 21 de l'embout femelle 20 et une lèvre 32 s'étendant obliquement à partir de ce corps de joint 31 au niveau de l'extrémité de raccordement 23 de l'embout femelle 20 pour appuyer radialement contre le tronçon d'extrémité 13 de l'embout mâle 10. Le joint 30 peut être rapporté librement ou solidaire de l'embout femelle 20 par exemple par surmoulage.

A titre de matériaux utilisables pour l'embout femelle 20 et la bague 40, on peut utiliser des matières plastiques telles que des polyamides (e.g. PA 6.6) ou des polyesters (e.g. polybutylène téréphtalate), par exemple.

A titre de matériaux utilisables pour le joint d'étanchéité 30, on peut utiliser des EPDM, des élastomères fluorocarbonés (FKM) ou même des copolymères éthylène-acrylate de méthyle (EAM), par exemple.

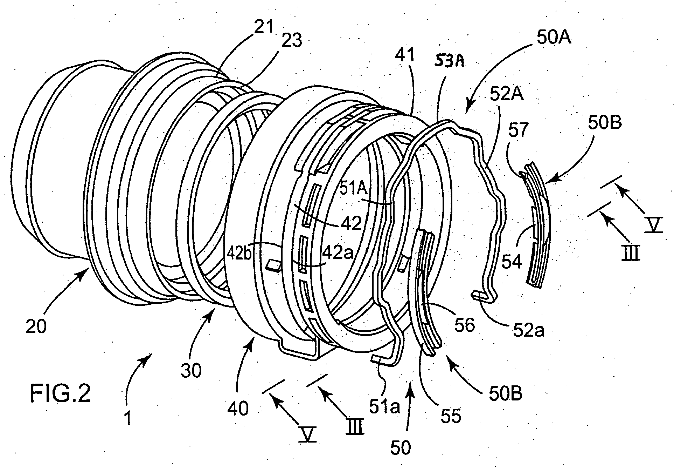

Concernant l'organe de verrouillage 50, on voit aux figures 2 à 4 qu'il présente une structure composite comprenant :
- une épingle métallique de verrouillage 50A formée dans cet exemple d'un fil de section carrée comportant un sommet 53A formant la tête de préhension 53 et deux branches arquées 51A et 52A se terminant par deux extrémités libres 51 a et 52a recourbées dans cet exemple d'un même côté axial (i.e. le côté arrière) du reste de l'épingle 50A, et
- deux fourreaux plastiques de verrouillage identiques 50B qui sont respectivement solidaires des branches 51A et 52A à l'exception de leurs extrémités libres 51 a et 52a et qui, selon l'invention, définissent chacun une face interne 54 et une face externe 55 de chaque aile 51, 52 reliées entre elles par une face avant 56 (avant s'entendant du côté de l'introduction de l'extrémité 11 de l'embout mâle 10). Quant à la face arrière 57 de chaque aile 51, 52, elle est dans cet exemple définie à la fois par le fourreau 50B et par la branche d'épingle 51A, 52A qu'il enserre (voir figure 4).

Chaque fourreau 50B présente en section transversale globalement une forme de « U » enserrant partiellement une branche d'épingle 51A, 52A, et il est monté sur cette dernière par clipage ou bien en étant solidaire de celle-ci par surmoulage.

Chaque aile 51, 52 comprend localement des portions inclinées 51b et 51c qui sont formées par le fourreau 50B correspondant sur la face avant 56 du fourreau 50B en retrait d'une portion la plus avancée 56a de cette face avant 56 et qui comprennent, formés dans le prolongement l'un de l'autre sur une même section transversale de chaque aile 51, 52 :
- un chanfrein de guidage 51b qui relie cette portion 56a à la face interne 54 du fourreau 50B et qui est adapté pour coopérer avec l'extrémité 11 de l'embout mâle 10 qui écarte les ailes 51 et 52 l'une de l'autre de sorte à guider l'insertion de l'embout 10 jusqu'à ce que sa collerette 12 dépasse axialement ces ailes 51 et 52, et
- un chanfrein de blocage 51c qui relie cette portion 56a au reste de la face avant 56 en s'éloignant de la face interne 54 et qui est adapté pour coopérer avec la bague 40 en bloquant les ailes 51 et 52 en position refermée axialement contre les bords avant 42a des lumières 42 et 43 de sorte à s'opposer à l'ouverture de l'organe 50 en fonctionnement.

Avantageusement, les chanfreins 51b et 51c de chaque fourreau 50B forment chacun un angle de 30 à 60° avec chaque face interne 54 et avec chaque portion la plus avancée 56a.

Comme visible aux figures 3 et 4, on procède de la manière suivante pour verrouiller l'embout mâle 10 dans l'embout femelle 20 via la bague de connexion 40 :

On commence par enfoncer radialement l'organe de verrouillage 50 dans la bague 40 équipant la portion de raccordement 21 de l'embout femelle 20 par une pression manuelle exercée sur sa tête de préhension 53, ce qui loge ses ailes 51 et 52 dans les lumières 42 et 43 (voir la position obtenue à la figure 1).

Puis, comme illustré à la figure 3, on insère progressivement dans la direction axiale l'embout mâle 10 à l'intérieur de la bague 40 (voir flèche A) pour que l'extrémité de raccordement 11 de l'embout mâle 10 appuie sur le chanfrein de guidage 51b de chaque fourreau 50B en écartant les deux fourreaux 50B l'un de l'autre pour les guider sur le tronçon d'extrémité 13 de l'embout 10.

On procède enfin (voir figure 4) à l'enfoncement complet de l'embout mâle 10 jusqu'à l'obtention de la position verrouillée où les ailes 51 et 52 sont calées par leurs fourreaux 50B derrière et contre la collerette 12 et où les chanfreins de blocage 51c bloquent ces ailes 51 et 52 en position refermée axialement contre les bords avant 42a des lumières 42 et 43, pour s'opposer à l'ouverture intempestive en fonctionnement de l'épingle 50A. On obtient ainsi le dispositif 1 verrouillé illustré à la figure 6.

Pour déconnecter ce dispositif 1 (voir figure 8), on commence par extraire transversalement l'organe 50 de la bague 40 en le soulevant par sa tête de préhension 53 ce qui a pour effet de déverrouiller le dispositif 1, puis on exerce une traction axiale sur l'embout mâle 10 dans le sens de la flèche B de la figure 8 (i.e. en sens opposé du sens d'insertion A de l'embout 10 visible à la figure 3).

## Revendications

1. Organe de verrouillage (50) destiné à équiper un dispositif de raccordement encliquetable (1) pour transfert de fluide comprenant un embout tubulaire mâle (10) à collerette (12) et à extrémité de raccordement (11) convergente et arrondie, et un embout tubulaire femelle (20) entouré et prolongé axialement par une bague de connexion (40) et recevant de manière étanche l'embout mâle, cet organe comportant deux ailes de verrouillage élastiques (51 et 52) réunies entre elles par une tête de préhension (53) et adaptées pour être enfoncées transversalement et réversiblement à travers deux lumières symétriques (42 et 43) respectives de la bague puis pour se bloquer par encliquetage contre et derrière cette collerette suite à l'insertion complète de l'embout mâle dans l'embout femelle, chaque aile présentant une section transversale variant sur sa longueur et deux faces interne (54) et externe (55) reliées entre elles par deux faces avant (56) et arrière (57) par rapport à la direction d'insertion (A) de l'embout mâle, **caractérisé en ce que** chaque aile (51, 52) comprend localement des portions inclinées (51 b et 51 c) qui sont formées sur la face avant (56) en retrait d'une portion la plus avancée (56a) de cette face avant et qui comprennent :
- au moins une portion inclinée de guidage (51 b) qui relie cette portion la plus avancée (56a) à la face interne (54) et qui est adaptée pour coopérer avec ladite extrémité de l'embout mâle qui écarte les ailes l'une de l'autre de sorte à guider l'insertion de cet embout jusqu'à ce que sa collerette dépasse axialement ces ailes, et
- au moins une portion inclinée de blocage (51c) qui relie cette portion la plus avancée (56a) au reste de la face avant (56) en s'éloignant de la face interne (54) et qui est adaptée pour coopérer avec la bague en bloquant les ailes en position refermée axialement contre des bords avant (42a) desdites lumières (42 et 43) de sorte à s'opposer à l'ouverture de l'organe en fonctionnement.

2. Organe de verrouillage (50) selon la revendication 1, **caractérisé en ce que** ladite au moins une portion inclinée de guidage (51 b) et ladite au moins une portion inclinée de blocage (51 c) sont chacune définies, sur une même section transversale de chaque aile (51, 52), par un chanfrein formant un angle de 30 à 60° avec ladite portion la plus avancée (56a) de ladite face avant (56) et/ou avec ladite face interne (54).

3. Organe de verrouillage (50) selon une des revendications précédentes, **caractérisé en ce qu'**il présente une structure composite comprenant :
- une épingle métallique de verrouillage (50A) comportant un sommet (53A) formant ladite tête de préhension (53) et deux branches (51A et 52A) globalement arquées présentant respectivement deux extrémités libres (51a et 52a) par exemple recourbées d'un même côté axial du reste de l'épingle, et
- deux fourreaux plastiques de verrouillage (50B) qui sont respectivement solidaires de ces branches à l'exception de leurs extrémités libres et qui définissent chacun à eux seuls ladite face interne (54), ladite face externe (55) et ladite face avant (56) de chaque aile (51, 52) incluant lesdites portions inclinées (51 b et 51 c).

4. Organe de verrouillage (50) selon les revendications 2 et 3, **caractérisé en ce que** chaque fourreau de verrouillage (50B) présente sur ladite section transversale de chaque aile (51, 52) globalement une forme de « U » enserrant partiellement chaque branche d'épingle (51A, 52A), laquelle épingle (50A) est de section transversale arrondie ou polygonale, chaque fourreau étant monté sur ladite épingle par clipage ou bien en étant solidaire via un surmoulage de celle-ci par injection d'une matière plastique constituant ce fourreau.

5. Dispositif de raccordement (1) pour transfert de fluide comprenant :
- un embout tubulaire mâle (10) présentant une extrémité de raccordement (11) convergente et arrondie et une collerette de raccordement (12) définissant entre elles un tronçon d'extrémité (13) globalement cylindrique de cet embout,
- un embout tubulaire femelle (20) qui comprend une portion terminale de raccordement (21) recevant de manière étanche l'embout mâle par interposition d'au moins un joint d'étanchéité annulaire (30) radialement autour de l'embout mâle,
- une bague de connexion (40) montée radialement sur cette portion de raccordement en la prolongeant axialement en une portion tubulaire avant (41) de la bague à deux lumières en arc de cercle (42 et 43) symétriques l'une de l'autre par rapport à l'axe de symétrie de la bague et chacune délimitées axialement par un bord avant (42a) et un bord arrière (42b), et
- un organe de verrouillage (50) de l'embout mâle dans l'embout femelle comportant deux ailes de verrouillage élastiques (51 et 52) qui sont réunies entre elles par une tête de préhension (53) et qui sont enfoncées transversalement de manière réversible à travers lesdites lumières en étant adaptées pour se bloquer par encliquetage en une position verrouillée contre et derrière la collerette suite à l'insertion complète de l'embout mâle dans l'embout femelle,
**caractérisé en ce que** l'organe de verrouillage est tel que défini à l'une des revendications précédentes, de telle sorte que :
- lors du début de l'insertion de l'embout mâle à l'intérieur de la bague, l'extrémité de raccordement de l'embout mâle appuie sur ladite au moins une portion inclinée de guidage (51b) de chaque aile préalablement enfoncée à travers la bague en écartant les deux ailes l'une de l'autre pour les guider sur le tronçon d'extrémité (13) de l'embout mâle jusqu'à l'obtention de la position verrouillée des ailes derrière et contre la collerette, puis que
- dans cette position verrouillée, ladite au moins une portion inclinée de blocage (51c) de chaque aile bloque les ailes en position refermée axialement contre lesdits bords avant (42a) desdites lumières (42 et 43) en s'opposant ainsi à l'ouverture intempestive en fonctionnement des ailes.

6. Dispositif de raccordement (1) selon la revendication 5, **caractérisé en ce que** lesdites faces internes respectives (54) des ailes (51 et 52) sont écartées l'une de l'autre dans la position verrouillée d'une distance qui est inférieure au diamètre externe de la collerette (12) et desdits bords avant (42a) des lumières (42 et 43).

7. Dispositif de raccordement (1) selon la revendication 5 ou 6, **caractérisé en ce que** l'organe de verrouillage (50) présente une structure composite comprenant :
- une épingle métallique de verrouillage (50A) de section transversale arrondie ou polygonale comportant un sommet (53A) formant ladite tête de préhension (53) et deux branches (51A et 52A) globalement arquées, et
- deux fourreaux plastiques de verrouillage (50B) qui sont respectivement solidaires de ces branches par exemple par clipage ou surmoulage et qui viennent au contact de l'embout mâle (10) et desdits bords avant (42a) des lumières (42 et 43) de la bague (40) lors de l'insertion complète de l'embout mâle.

8. Dispositif de raccordement (1) selon une des revendications 5 à 7, **caractérisé en ce que** ledit au moins un joint d'étanchéité annulaire (30) est interposé radialement entre l'embout mâle (10) et l'embout femelle (20) et axialement en deçà de l'extrémité (23) de ce dernier et desdits bords arrière (42b et 43b) des lumières (42 et 43), l'embout mâle présentant :
- ledit tronçon d'extrémité (13) qui sert de portée pour ce joint, et
- un tronçon de serrage (14) globalement cylindrique situé derrière la collerette (12), laquelle diverge à partir du tronçon d'extrémité de manière sensiblement tronconique puis se termine par une portion annulaire radiale (12b) derrière laquelle butent les ailes (51 et 52) dans la position verrouillée, ce tronçon de serrage présentant un diamètre inférieur à celui de ce tronçon d'extrémité.

9. Procédé de verrouillage d'un dispositif de raccordement (1) selon une des revendications 5 à 8, **caractérisé en ce qu'**il comprend essentiellement les étapes suivantes :
a) une insertion radiale de l'organe de verrouillage (50) en position enfoncée à travers la bague (40) équipant ladite portion de raccordement (21) de l'embout femelle (20) par une pression manuelle exercée sur ladite tête de préhension (53) de cet organe, de sorte que ses ailes (51 et 52) soient logées dans lesdites lumières (42 et 43),
b) une insertion axiale progressive de l'embout mâle (10) à l'intérieur de la bague ainsi équipée pour que l'extrémité de raccordement (11) de l'embout mâle appuie sur ladite au moins une portion inclinée de guidage (51 b) de chaque aile en écartant les ailes l'une de l'autre pour les guider sur le tronçon d'extrémité (13) de l'embout mâle, puis
c) un enfoncement complet de l'embout mâle jusqu'à l'obtention de ladite position verrouillée où les ailes sont calées derrière et contre ladite collerette (12) et où ladite au moins une portion inclinée de blocage (51c) bloque ces ailes en position refermée axialement contre lesdits bords avant (42a) des lumières (42 et 43) de la bague (40), pour s'opposer à l'ouverture intempestive en fonctionnement de ces ailes.

10. Procédé de verrouillage selon la revendication 9, **caractérisé en ce qu'**il comprend avant l'étape a) une solidarisation par clipage ou surmoulage de deux fourreaux plastiques de verrouillage (50B) respectivement avec deux branches (51A et 52A) d'une épingle métallique (50A), pour que les fourreaux viennent au contact de l'embout mâle (10) et desdits bords avant (42a) des lumières (42 et 43) aux étapes b) et c).

## Patentansprüche

1. Verriegelungsorgan (50), das zur Ausstattung einer rastbaren Anschlussvorrichtung (1) für Flüssigkeitstransfer bestimmt ist, umfassend eine männliche rohrförmige Muffe (10) mit Flansch (12) und konvergierendem und abgerundetem Anschlussende (11) und eine weibliche rohrförmige Muffe (20), die von einem Kopplungsring (40) umgeben und axial verlängert ist und die männliche Muffe dicht aufnimmt, wobei dieses Organ zwei elastische Verriegelungsflügel (51 und 52) aufweist, die zwischen sich mittels eines Greifkopfs (53) verbunden sind und ausgebildet, um transversal und reversibel durch zwei jeweilige symmetrische Öffnungen (42 und 43) der Rings eingesetzt zu sein, dann, um durch Rasten gegen und hinter diesen Flansch nach dem vollständigen Einsetzen der männlichen Muffe in die weibliche Muffe zu blockieren, wobei jeder Flügel einen transversalen Querschnitt aufweist, der sich über seine Länge verändert, und zwei Innen- (54) und Außenseiten (55), die miteinander durch zwei Vorder- (56) und Rückseiten (57) in Bezug auf die Einsetzrichtung (A) der männlichen Muffe verbunden sind, **dadurch gekennzeichnet, dass** jeder Flügel (51, 52) lokal geneigte Abschnitte (51b und 51c) aufweist, die auf der Vorderseite (56) von einem am meisten vorgeschobenem Abschnitt (56a) dieser Vorderseite zurückgesetzt ausgebildet sind und die umfassen:
- mindestens einen geneigten Führungsabschnitt (51b), welcher diesen am meisten vorgeschobenen Abschnitt (56a) mit der Innenseite (54) verbindet und der ausgebildet ist, um mit dem Ende der männlichen Muffe zusammenzuwirken, das die Flügel voneinander beabstandet, um das Einsetzen dieser Muffe zu führen, bis ihr Flansch axial über diesen Flügeln hervorsteht, und
- mindestens einen geneigten Blockierabschnitt (51c), welcher diesen am meisten vorgeschobenen Abschnitt (56a) mit dem Rest der Vorderseite (56) verbindet, indem er sich von der Innenseite (54) entfernt und der ausgebildet ist, um mit dem Ring durch Blockieren der Flügel in axial gegen Vorderränder (42a) der Öffnungen (42 und 43) anliegender Position derart zusammenzuwirken, dass dem Öffnen des Funktionsorgans entgegengewirkt wird.

2. Verriegelungsorgan (50) nach Anspruch 1, **dadurch gekennzeichnet, dass** der mindestens eine geneigte Führungsabschnitt (51b) und der mindestens eine geneigte Blockierabschnitt (51c) jeweils auf einem selben transversalen Querschnitt jedes Flügels (51, 52) mittels einer Schräge definiert sind, die einen Winkel von 30 bis 60° mit dem am meisten vorgeschobenen Abschnitt (56a) der Vorderseite (56) und/oder mit der Innenseite (54) bilden.

3. Verriegelungsorgan (50) nach einem der vorangehenden Ansprüche, **dadurch gekennzeichnet, dass** es eine Verbundstruktur aufweist, umfassend:
- eine metallische Verriegelungsnadel (50A), umfassend eine Spitze (53A), die den Greifkopf (53) bildet, und zwei allgemein gewölbte Schenkel (51A und 52A), die jeweils zwei freie, beispielsweise auf einer selben axialen Seite des Rests der Nadel gekrümmte Enden (51a und 52a) aufweisen, und
- zwei Verriegelungshülsen aus Kunststoff (50B), die jeweils mit diesen Schenkeln mit Ausnahme ihrer freien Enden fest verbunden sind und die jeweils allein die Innenseite (54) definieren, wobei die Außenseite (55) und die Vorderseite (56) jedes Flügels (51, 52) die geneigten Abschnitte (51b und 51c) einschließt.

4. Verriegelungsorgan (50) nach Ansprüche 2 und 3, **dadurch gekennzeichnet, dass** jede Verriegelungshülse (50B) auf dem transversalen Querschnitt jedes Flügels (51, 52) allgemein eine U-Form aufweist, welche jeden Nadelschenkel (51A, 52A) teilweise umschließt, wobei die Nadel (50A) einen abgerundeten oder polygonalen transversalen Querschnitt hat, wobei jede Hülse auf der Nadel durch Klipsen montiert ist oder indem sie mittels eines Overmouldings derselben durch Spritzen eines Kunststoffmaterials, das diese Hülse bildet, fest verbunden ist.

5. Anschlussvorrichtung (1) für Flüssigkeitstransfer, umfassend:
- eine männliche rohrförmige Muffe (10), die ein konvergierendes und abgerundetes Anschlussende (11) und einen Anschlussflansch (12) aufweist, die zwischen sich ein allgemein zylindrisches Endstück (13) dieser Muffe definieren,
- eine weibliche rohrförmige Muffe (20), die einen terminalen Anschlussabschnitt (21) umfasst, der die männliche Muffe durch radiales Zwischenstellen von mindestens einer ringförmigen Dichtung (30) um die männliche Muffe dicht aufnimmt,
- einen Kupplungsring (40), der auf diesem Anschlussabschnitt radial montiert ist und diesen dabei axial in einem vorderen rohrförmigen Abschnitt (41) des Rings mit zwei kreisbogenförmigen Öffnungen (42 und 43) verlängert, die in Bezug auf die Symmetrieachse des Rings zueinander symmetrisch und jeweils von einem vorderen Rand (42a) und einem hinteren Rand (42b) axial begrenzt sind, und
- ein Verriegelungsorgan (50) der männlichen Muffe in der weiblichen Muffe, das zwei elastische Verriegelungsflügel (51 und 52) umfasst, die miteinander durch einen Greifkopf (53) verbunden sind und die transversal reversibel durch die Öffnungen eingeführt sind und dabei ausgebildet, um sich in einer verriegelten Position gegen und hinter dem Flansch infolge des vollständigen Einführens der männlichen Muffe in die weibliche Muffe durch Rasten zu blockieren,
**dadurch gekennzeichnet, dass** das Verriegelungsorgan einem der vorangehenden Ansprüche entspricht, so dass:
- sich das Anschlussende der männlichen Muffe zu Beginn des Einsetzens der männlichen Muffe in das Innere des Rings auf dem mindestens einen geneigten Führungsabschnitt (51b) jedes zuvor durch den Ring eingeführten Flügels durch Beabstanden der zwei Flügel voneinander abstützt, um sie bis zur Herstellung der verriegelten Position der Flügel hinter und auf dem Flansch auf das Endstück (13) der männlichen Muffe zu führen, danach dass
- in dieser verriegelten Position der mindestens eine geneigte Blockierabschnitt (51c) jedes Flügels die Flügel auf den vorderen Rändern (42a) der Öffnungen (42 und 43) in geschlossener Position axial blockiert und somit dem Öffnen zur Unzeit der Flügel in Funktion entgegenwirkt.

6. Anschlussvorrichtung (1) nach Anspruch 5, **dadurch gekennzeichnet, dass** die jeweiligen Innenseiten (54) der Flügels (51 und 52) in der verriegelten Position in einem Abstand voneinander beabstandet sind, der kleiner ist als der Außendurchmesser des Flanschs (12) und der vorderen Ränder (42a) der Öffnungen (42 und 43).

7. Anschlussvorrichtung (1) nach Anspruch 5 oder 6, **dadurch gekennzeichnet, dass** das Verriegelungsorgan (50) eine Verbundstruktur aufweist, umfassend:
- eine metallische Verriegelungsnadel (50A) mit abgerundetem oder polygonalem transversalem Querschnitt, die eine Spitze (53A), welche den Greifkopf (53) bildet, und zwei allgemein gewölbte Schenkel (51A und 52A) umfasst, und
- zwei Verriegelungshülsen aus Kunststoff (50B), die jeweils mit diesen Schenkeln beispielsweise durch Klipsen oder Overmoulding fest verbunden sind und die mit der männlichen Muffe (10) und den vorderen Rändern (42a) der Öffnungen (42 und 43) des Rings (40) beim vollständigen Einsetzen der männlichen Muffe in Kontakt kommen.

8. Anschlussvorrichtung (1) nach einem der Ansprüche 5 bis 7, **dadurch gekennzeichnet, dass** die mindestens eine ringförmige Dichtung (30) zwischen der männlichen Muffe (10) und der weiblichen Muffe (20) radial und axial jenseits des Endes (23) derselben und der hinteren Ränder (42b und 43b) der Öffnungen (42 und 43) angeordnet ist, wobei die männliche Muffe aufweist:
- das Endstück (13), welches für diese Dichtung als Auflagefläche dient, und
- einen allgemein zylindrisches Spannstück (14), das sich hinter dem Flansch (12) befindet, welches ab dem Endstück etwa kegelstumpfförmig divergiert und dann in einem radialen ringförmigen Abschnitt (12b) endet, hinter welchem die Flügel (51 und 52) in einer verriegelten Position enden, wobei dieses Spannstück einen kleineren Durchmesser als das Endstück aufweist.

9. Verriegelungsverfahren einer Anschlussvorrichtung (1) nach einem der Ansprüche 5 bis 8, **dadurch gekennzeichnet, dass** es im Wesentlichen die folgenden Schritte aufweist:
a) ein radiales Einsetzen des Verriegelungsorgans (50) in eingeschobener Position durch den Ring (40), welcher den Anschlussabschnitt (21) der weiblichen Muffe (20) ausstattet, durch einen manuellen Druck, ausgeübt auf den Greifkopf (53) dieses Organs, so dass seine Flügel (51 und 52) in die Öffnungen (42 und 43) eingreifen,
b) ein schrittweises axiales Einsetzen der männlichen Muffe (10) in das Innere des derart ausgestatteten Rings, so dass sich das Anschlussende (11) der männlichen Muffe auf dem mindestens einen geneigten Führungsabschnitt (51b) jedes Flügels abstützt und dabei die Flügel voneinander beabstandet, um sie auf das Endstück (13) der männlichen Muffe zu führen, danach
c) ein vollständiges Eindrücken der männlichen Muffe bis zur Herstellung der verriegelten Position, in welcher die Flügel hinter und auf dem Flansch (12) verkeilt sind und in welcher der mindestens eine geneigte Blockierabschnitt (51c) diese Flügel auf den vorderen Rändern (42a) der Öffnungen (42 und 43) des Rings (40) in geschlossener Position axial blockiert, um dem Öffnen zur Unzeit der Flügel in Funktion entgegenzuwirken.

10. Verriegelungsverfahren nach Anspruch 9, **dadurch gekennzeichnet, dass** es vor dem Schritt a) eine feste Verbindung durch Klipsen oder Overmoulding von zwei Verriegelungshülsen aus Kunststoff (50B) jeweils mit zwei Schenkeln (51A und 52A) einer Metallnadel (50A) umfasst, damit die Hülsen in den Schritten b) und c) mit der männlichen Muffe (10) und den vorderen Rändern (42a) der Öffnungen (42 und 43) in Kontakt kommen.

## Claims

1. Locking member (50) which is intended to be provided on a snap-fitting connection device (1) for fluid transfer comprising a male tubular end-piece (10) having a collar (12) and having a convergent and rounded connection end (11), and a female tubular end-piece (20) which is surrounded and extended axially by a connection ring (40) and which receives the male end-piece in a sealed manner, this member comprising two resilient locking flaps (51 and 52) which are joined together by a gripping head (53) and which are capable of being pushed in transversely and in a reversible manner through two respective symmetrical apertures (42 and 43) of the ring, then of being blocked by means of snap-fitting against and behind this collar following the complete insertion of the male end-piece into the female end-piece, each flap having a cross section which varies over the length thereof and two inner (54) and outer (55) faces which are connected to each other by two front (56) and rear (57) faces relative to the direction (A) of insertion of the male end-piece, **characterized in that** each flap (51, 52) locally comprises inclined portions (51b and 51c) which are formed on the front face (56) set back from a foremost portion (56a) of this front face and which comprise:
- at least one inclined guiding portion (51b) which connects this foremost portion (56a) to the inner face (54) and which is capable of co-operating with said end of the male end-piece which spreads the flaps from each other in order to guide the insertion of this end-piece until the collar thereof extends axially beyond these flaps, and
- at least one inclined blocking portion (51c) which connects this foremost portion (56a) to the remainder of the front face (56) by extending away from the inner face (54), and which is capable of co-operating with the ring by blocking the flaps in a closed position axially against front edges (42a) of the apertures (42 and 43) in order to oppose the opening of the member during operation.

2. Locking member (50) according to claim 1, **characterized in that** said at least one inclined guiding portion (51b) and said at least one inclined blocking portion (51c) are each defined, over a same cross section of each flap (51, 52), by a chamfer which forms an angle of from 30 to 60° with said foremost portion (56a) of said front face (56) and/or with said inner face (54).

3. Locking member (50) according to either of the preceding claims, **characterized in that** it has a composite structure which comprises:
- a metal locking pin (50A) which comprises an upper portion (53A) which forms the gripping head (53) and two substantially curved branches (51A and 52A) which have two free ends (51a and 52a), respectively, which are, for example, bent over on a same axial side of the remainder of the pin, and
- two plastics locking sheaths (50B) which are fixedly joined to these branches, respectively, with the exception of the free ends thereof and which each alone define said inner face (54), said outer face (55) and said front face (56) of each flap (51, 52) including said inclined portions (51b and 51c).

4. Locking member (50) according to claim 3, **characterized in that** each locking sheath (50B), over said cross section of each flap (51, 52), substantially has a "U"-like shape which partially tightly surrounds each branch of the pin (51A, 52A), which pin (50A) has a rounded or polygonal cross section, each sheath being mounted on said pin by means of clip-fitting or being fixedly joined to the pin by means of over-molding by injection-molding of a plastics material which constitutes this sheath.

5. Connection device (1) for fluid transfer comprising:
- a male tubular end-piece (10) which has a convergent and rounded connection end (11) and a connection collar (12) which together define a substantially cylindrical end portion (13) of this end-piece,
- a female tubular end-piece (20) which comprises an end connection portion (21) which receives the male end-piece in a sealed manner by the interposition of at least one annular seal (30) radially around the male end-piece,
- a connection ring (40) which is mounted radially on this connection portion by extending it axially into a front tubular portion (41) of the ring having two apertures (42 and 43) which are in the form of an arc of a circle and which are symmetrical with respect to each other relative to an axis of symmetry of the ring and which are each delimited axially by a front edge (42a) and a rear edge (42b), and
- a locking member (50) for locking the male end-piece in the female end-piece comprising two resilient locking flaps (51 and 52) which are joined together by a gripping head (53) and which are pushed in transversely in a reversible manner through said apertures and which are capable of being blocked by means of snap-fitting in a locked position against and behind the collar following complete insertion of the male end-piece into the female end-piece,
**characterized in that** the locking member is as defined in one of the preceding claims, so that:
- at the beginning of the insertion of the male end-piece inside the ring, the connection end of the male end-piece presses on said at least one inclined guiding portion (51b) of each flap which has previously been pushed in through the ring, spreading the two flaps from each other in order to guide them over the end portion (13) of the male end-piece until the locked position of the flaps behind and against the collar is obtained, then,
- in this locked position, said at least one inclined blocking portion (51c) of each flap blocks the flaps in a closed position axially against said front edges (42a) of said apertures (42 and 43), thereby opposing the untimely opening of the flaps during operation.

6. Connection device (1) according to claim 5, **characterized in that** said respective inner faces (54) of the flaps (51 and 52) are spread from each other in the locked position by a distance which is less than the outer diameter of the collar (12) and of said front edges (42a) of the apertures (42 and 43).

7. Connection device (1) according to claim 5 or 6, **characterized in that** the locking member (50) has a composite structure which comprises:
- a metal locking pin (50A) which has a rounded or polygonal cross section and which comprises an upper portion (53A) which forms said gripping head (53) and two substantially curved branches (51A and 52A), and
- two plastics locking sheaths (50B) which are fixedly joined to these branches, respectively, for example, by means of clip-fitting or over-molding and which move into contact with the male end-piece (10) and said front edges (42a) of the apertures (42 and 43) of the ring (40) during the complete insertion of the male end-piece.

8. Connection device (1) according to one of claims 5 to 7, **characterized in that** said at least one annular seal (30) is interposed radially between the male end-piece (10) and the female end-piece (20) and axially short of the end (23) thereof and of said rear edges (42b and 43b) of the apertures (42 and 43), the male end-piece having:
- said end portion (13) which acts as a support surface for this seal, and
- a substantially cylindrical clamping portion (14) which is located behind the collar (12), which collar diverges from the end portion in a substantially frustoconical manner then terminates in a radial annular portion (12b) behind which the flaps (51 and 52) abut in the locked position, this clamping portion having a diameter less than that of this end portion.

9. Locking method for a connection device (1) according to one of claims 5 to 8, **characterized in that** it substantially comprises the following steps:
a) radially inserting the locking member (50) into a pushed-in position through the ring (40) with which said connection portion (21) of the female end-piece (20) is provided, by means of manual pressure applied to said gripping head (53) of this member so that the flaps (51 and 52) thereof are accommodated in the apertures (42 and 43),
b) progressively axially inserting the male end-piece (10) inside the ring equipped in this manner so that the connection end (11) of the male end-piece presses on said at least one inclined guiding portion (51b) of each flap, thereby spreading the flaps from each other in order to guide them over the end portion (13) of the male end-piece, then
c) completely pushing the male end-piece in until said locked position is obtained, in which position the flaps are engaged behind and against the collar (12) and in which position said at least one inclined blocking portion (51c) blocks these flaps in an axially closed position against said front edges (42a) of the apertures (42 and 43) of the ring (40) in order to oppose the untimely opening of these flaps during operation.

10. Locking method according to claim 9, **characterized in that** it comprises, before step a), fixedly joining, by means of clip-fitting or over-molding, two plastics locking sheaths (50B) to two branches (51A and 52A) of a mental pin (50A), respectively, so that the sheaths move into contact with the male end-piece (10) and with said front edges (42a) of the apertures (42 and 43) in steps b) and c).
